# EUROPEAN PATENT SPECIFICATION

(11) **EP 3 890 284 B1**
(45) Date of publication and mention of the grant of the patent: **06.09.2023**
(21) Application number: 19902593.3
(22) Date of filing: 10.12.2019
(51) Int. Cl.: H04M 1/72409, H04M 1/02, H02J 1/00, G06F 1/16, H04M 1/04, H02J 7/00

(54) **CELL PHONE AND HOST**
MOBILTELEFON UND HOST
TÉLÉPHONE CELLULAIRE ET HÔTE

(30) Priority: 29.12.2018 CN 201822276771 U
(43) Date of publication of application: 06.10.2021
(73) Proprietor: GUANGDONG OPPO MOBILE TELECOMMUNICATIONS CORP., LTD., Dongguan, Guangdong 523860 (CN)
(72) Inventor: LI, Jie, Dongguan, Guangdong 523860 (CN)
(74) Representative: Ipside
(86) International application number: PCT/CN2019/124219
(87) International publication number: WO 2020/135013

(56) References cited:
- EP-A1- 3 288 243
- WO-A1-2018/018944
- CN-U- 207 410 590
- KR-Y1- 200 408 336

## Description

### TECHNICAL FIELD

The described embodiments relate to mobile terminal technology, and in particular to a cell phone and a host.

### BACKGROUND

In order to solve a problem of mutual restraints between slimness and performance of a mobile terminal, the mobile terminal can be divided into a host and a slave. The slave may be mounted to and demounted from the host. On the one hand, charging of the host is inconvenient. On the other hand, charging of the slave is also inconvenient.

Patent No. WO2018/018944A1 relates to a mobile terminal including a circuit motherboard, a battery holder, a USB connecting board assembly, a USB connecting base, and an FPC charging circuit board.

Patent No. CN 207410590U relates to a circuit connecting structure and a terminal.

Patent No. KR 200408336Y1 relates to a mobile phone having a keypad unit as an input unit and a window unit as an image output unit, and more particularly to a detachable mobile phone capable of using a keypad unit and a window unit separately.

### SUMMARY

The present disclosure is set out in the appended set of claims.

### BRIEF DESCRIPTION OF THE DRAWINGS

In order to make the technical solution described in the embodiments of the present disclosure or related art more clear, the drawings used for the description of the embodiments or related art will be briefly described as follows. Apparently, the drawings described below are only for some embodiments of the present disclosure. It should be understood that, one skilled in the art might acquire other drawings based on these drawings, without paying any creative efforts.
FIG. 1 is a front view illustrating a cell phone according to an embodiment of the present disclosure.
FIG. 2 is a right view of the cell phone illustrated in FIG. 1.
FIG. 3 is a perspective view of the cell phone illustrated in FIG. 1 with a slave demounted from a host.
FIG. 4 is a front view of a host in a first embodiment of the cell phone illustrated in FIG. 3 with partial components demounted.
FIG. 5 is a rear view of a host illustrated in FIG. 4.
FIG. 6 is a front view of a host in a second embodiment of the cell phone illustrated in FIG. 3 with partial components demounted.
FIG. 7 is a rear view of a host illustrated in FIG. 6.
FIG. 8 is a front view of a host in a third embodiment of the cell phone illustrated in FIG. 3 with partial components demounted.
FIG. 9 is a rear view of a host illustrated in FIG. 8.
FIG. 10 is a flow chart of a cell phone according to an embodiment of the present disclosure working in a first working state.
FIG. 11 is another flow chart of the cell phone in FIG. 10 working in the first working state.
FIG. 12 is a flow chart of a cell phone according to an embodiment of the present disclosure working in a second working state.
FIG. 13 is another flow chart of the cell phone in FIG. 12 working in the second working state.
FIG. 14 is a modular block diagram of a cell phone according to a first embodiment of the present disclosure.
FIG. 15 is a modular block diagram of a cell phone according to a second embodiment of the present disclosure.
FIG. 16 is a modular block diagram of a cell phone according to a third embodiment of the present disclosure.

### DETAILED DESCRIPTION

For ease of understanding, the present disclosure is more fully described below with reference to relevant accompanying drawings. Preferred embodiments of the present disclosure are illustrated in the accompanying drawings. However, the present disclosure can be implemented in many different forms and is not limited to the embodiments described herein. Rather, these embodiments are provided for the purpose of providing a more thorough and comprehensive understanding of the present disclosure.

The term "terminal device" as used in the embodiments of the disclosure may include, but is not limited to, a device capable of receiving and/or transmitting communication signals and configured to be connected via any one or more of the following connection modes:
(1) a wired connection, for example, a public switched telephone networks (PSTN), a digital subscriber line (DSL), a digital cable, a cable used for direct connection.
(2) a wireless interface, for example, a cellular network, a wireless local area network (WLAN), a digital television network such as a digital video broadcasting-handheld (DVB-H) network, a satellite network, an AM-FM broadcast transmitter.

A terminal device configured to communicate via the wireless interface may be referred to as a "mobile terminal". Examples of the mobile terminal may include, but may not be limited to, the following electronic devices:
(1) a satellite or cellular telephone;
(2) a personal communication system (PCS) terminal capable of combining cellular radio telephone and data processing, fax, and data communication capabilities;
(3) a personal digital assistant (PDA) equipped with radio telephone capacity, pager, Internet/Intranet access capacity, Web browser, notebook, calendar, and/or global positioning system (GPS) receiver;
(4) a conventional laptop and/or a handheld receiver;
(5) a conventional laptop and/or handheld radio telephone transceivers, etc.

A host according to an embodiment of the present invention includes a first power module, a main board, a secondary board, a charging interface, a charging circuit board, a connecting circuit board, and at least one charging contact. Both the main board and the secondary board are connected with the first power module. The first power module is configured to supply power to the main board and the secondary board. The charging circuit board includes a main part and a branch part. Both the main part and the branch part are connected to the charging interface. Both the branch part and the at least one charging contact are connected to the secondary board. The main part is connected to the main board. The charging interface is configured to charge the first power module through the main part and the main board. The charging interface is configured to be conducted with the at least one charging contact through the branch part.

The host includes a connecting circuit board. The connecting circuit board connects the main board and the secondary board. The main board is configured to transmit at least one of data and current with the secondary board through the connecting circuit board. A portion of the connecting circuit board is disposed across the first power module and located at a side of the first power module where the at least one charging contact is located.

In another embodiment, the main board and the secondary board may be spaced apart from each other. The first power module may be located between the main board and the secondary board.

A cell phone according to an embodiment of the present disclosure may include a host and a slave. The host may be the host in any embodiment as described above. The slave may be mountable to the host such that the at least one charging contact may be connected and contacted with the at least one connecting contact. The charging interface may be configured to charge the second power module through the branch part, the at least one charging contact, and the at least one connecting contact. The slave may be demountable from the host. When demounted from the host, the slave may be capable of communicating with the host.

In another embodiment, when the slave is mounted to the host, the first power module may be configured to charge the second power module through the connecting circuit board, the at least one charging contact, and the at least one connecting contact.

In another embodiment, the host may include a camera. The camera may be connected to the main board.

In further another embodiment, the first power module and the second power module may include lithium batteries capable of being charged and discharged multiple times.

In another embodiment, the charging circuit board may be a flexible circuit board.

In another embodiment, an area of the main board may be larger than an area of the secondary board.

In another embodiment, the charging interface may be one of a Micro-USB interface, a Type-C interface, and a Lighting interface.

In still further another embodiment, the slave may have a front surface, a rear surface, and a peripheral side surface. The rear surface may be arranged back towards the front surface. The peripheral side surface may be connected between the front surface and the rear surface. A display area of the display may be oriented towards the front surface. The host may include a seat and a bracket connected to the seat. The seat may define a receiving slot. The bracket may be configured to be reversible relative to the seat to be in one of a folded state and an unfolded state. When in the folded state, the bracket may be received in the receiving slot. When in the unfolded state, the slave may be enabled to be placed vertically or obliquely on the seat, with the bracket being contacted with the rear surface and the seat being contacted with the peripheral side surface.

In still further another embodiment, the host may include a wireless modem module, a first master controller, and a first wireless transceiver module. The slave may include a keyboard, a second master controller, and a second wireless transceiver module. When in a first working state of the cell phone, a control command output by the keyboard, under a control of the second master controller and after being modulated by the second wireless transceiver module, may be sent to the first wireless transceiver module. The sent control command may be modulated by the wireless modem module under a control of the first master controller. Then the modulated control command may be sent to the air. A control signal from the air may be demodulated by the wireless modem module and then may pass through the first master controller. The demodulated control signal may be modulated by the first wireless transceiver module. Then the modulated control signal may be sent to the slave. After being received by the second wireless transceiver module, the received control signal may be displayed by the display, under the control of the second master controller.

In another embodiment, the host may include a wireless modem module, a first master controller, and a first wireless transceiver module. The slave may include a second master controller, a microphone, a receiver, an audio encoder, an audio decoder, and a second wireless transceiver module. The second wireless transceiver module may be configured to communicate with the first wireless transceiver module. When in a second working state of the cell phone, an audio signal from the microphone, after being encoded by the audio encoder, may be transmitted to the second master controller. The transmitted audio signal may be sent out by the second wireless transceiver module under a control of the second master controller. After the sent audio signal is received by the first wireless transceiver module, the received audio signal may be transmitted to the wireless modem module to be modulated under a control of the first master controller. Then the modulated audio signal may be sent to the air. A signal from the air, after being demodulated by the wireless modem module, may be transmitted to the first master controller. Under the control of the first master controller, the demodulated signal may be transmitted to the first wireless transceiver module. After being modulated by the first wireless transceiver module, the modulated signal may be sent to the slave and demodulated by the second wireless transceiver module to obtain the audio signal. Under the control of the second master controller, the demodulated audio signal, after being decoded by the audio decoder, may be output by the receiver.

In another embodiment, the host may include a wireless modem module and a first master controller, and a first wireless transceiver module. The first master controller may be configured to communicate with the wireless modem module and the first wireless transceiver module. The slave may include a second master controller and a second wireless transceiver module. The second wireless transceiver module may be configured to communicate with the first wireless transceiver module. The second master controller may be configured to communicate with the second wireless transceiver module. The slave may be configured to access communication network through the host.

In further another embodiment, the host may include a first wireless communication module, a first master controller, and a second wireless communication module. The first master controller may be configured to communicate with the first wireless communication module and the second wireless communication module. The slave may include a second master controller and a third wireless communication module. The second master controller may be configured to communicate with the third wireless communication module. The third wireless communication module may be configured to communicate with the first wireless communication module. The second wireless communication module may be configured to communicate with a base station.

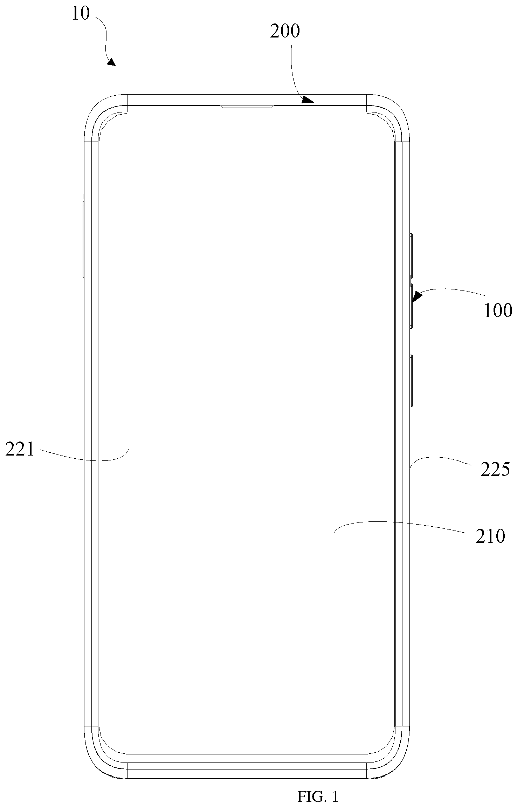

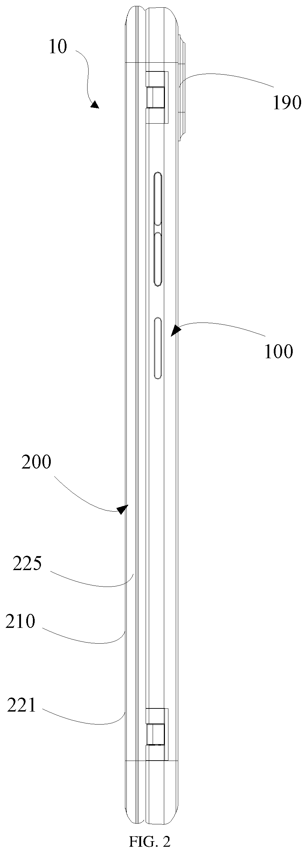

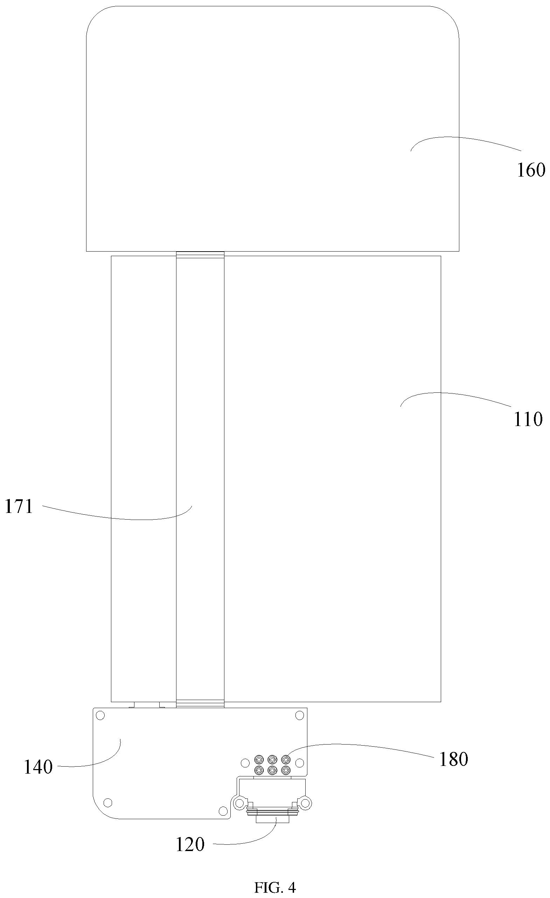

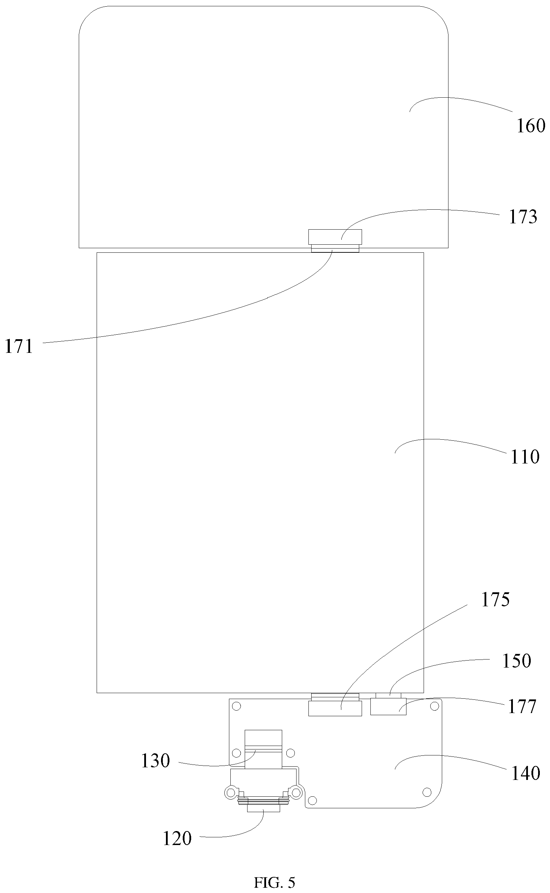

As shown in FIGS. 1-3, a cell phone in an embodiment may be a smartphone. The cell phone 10 may include a host 100 and a slave 200. With further reference of FIGS. 4 and 5, in a first embodiment, the host 100 may include a first power module 110, a charging interface 120, a charging circuit board 130, a secondary board 140 and a power circuit board 150. The first power module 110 may be connected with the secondary board 140 through the power circuit board 150. The first power module 110 may be configured to supply power to the secondary board 140. In an embodiment, the charging circuit board 130 and the power circuit board 150 may be flexible printed circuit (FPC) boards. The flexible printed circuit boards may be thin and easy to bend and deform. The charging interface 120 may be a Micro-USB interface, a Type-C interface, or a Lighting interface. The charging interface 120 may be connected with the secondary board 140 through the charging circuit board 130. Specifically, the charging circuit board 130 may be soldered to the secondary board 140 or connected to the secondary board 140 through a board-to-board connector. The charging interface 120 may be configured to charge the first power module 110 through the charging circuit board 130, the secondary board 140 and the power circuit board 150.

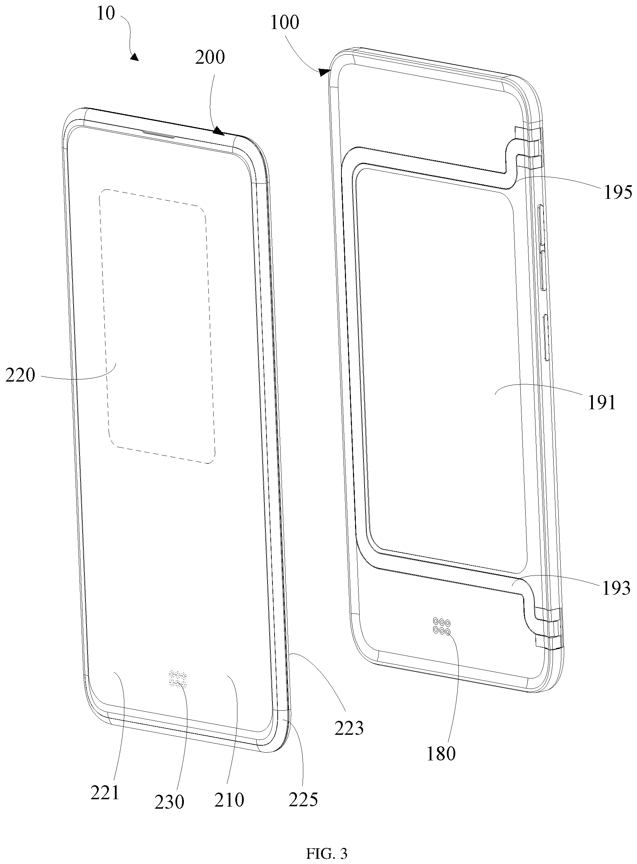

As illustrated in FIG. 3, the slave 200 may include a display 210 and a second power module 220. The second power module 220 may be configured to supply power to the display 210. The display 210 may be configured to display information and provide an interactive interface for user. The slave 200 may be mountable to and demountable from the host 100. When the slave 200 is demounted from the host 100, the host 100 may be capable of communicating with the slave 200. When demounted from the host 100, the slave 200 can work independently and perform basic functions such as display, call, etc. The slave 200 may have a small amount of electronic components to facilitate slimness of the slave 200 and to facilitate the user's use. The host 100 may be placed in a pocket or elsewhere. The host 100 may be configured with a large capacity battery or storage unit so as to enhance performance of the cell phone 10. When mounted to the host 100, the slave 200 can be combined with the host 100 to form the cell phone 10 to achieve complete functionality of the cell phone 10, which is also beneficial to the user's use. In an embodiment, the first power module 110 and the second power module 220 may include lithium batteries capable of being repeatedly charged and discharged multiple times. In other embodiments, the cell phone 10 may be a tablet, etc. The cell phone 10 as described above may be able to achieve slimness of the slave 200 and to improve the performance of the cell phone 10 such as endurance or storage.

In the above cell phone 10, the charging interface 120 of the host 100 may be connected with the secondary board 140 through the charging circuit board 130, the first power module 110 may be connected with the secondary board 140 through the power circuit board 150, and the charging interface 120 may be configured to charge the first power module 110 through the charging circuit board 130, the secondary board 140 and the power circuit board 150. The charging circuit board 130 may have a short length, thereby reducing energy consumption during charging and increasing available space inside the host 100. It is understood that the charging interface 120 and the charging circuit board 130 may also be configured for communication between the host 100 and external devices, for example, the host 100 can be connected to an external device such as a computer through a data cable to transfer data.

In one embodiment, the secondary board 140 may include a power management module. The first power module 110 may be connected to the power management module through the power circuit board 150. The power management module may be used for charging, standby, and discharge management of the first power module 110, can provide overvoltage, overcurrent, over-temperature, and short-circuit protection, and can supply multiple voltages of power to other circuit units of the host 100, thereby improving the safety of the use of the first power module 110. Furthermore, the host 100 may include a main board 160. The main board 160 may include a first master controller. The first power module 110 may be configured to supply power to the main board 160. The main board 160 and the secondary board 140 may be spaced apart from each other. The first power module 110 may be located between the main board 160 and the secondary board 140. An area of the main board 160 may be larger than an area of the secondary board 140. The main board 160 may integrate main electronic components of the host 100 such as the first master controller, a storage module, etc. The host 100 may include a camera 190. The camera 190 may be connected to the main board 160. The secondary board 140 may integrate electronic components such as the power management module, etc.

As shown in FIGS. 4 and 5, the host 100 includes a connecting circuit board 171. The connecting circuit board 171 may be a flexible circuit board. The connecting circuit board 171 connects the main board 160 and the secondary board 140. The main board 160 is configured to transmit at least one of data and current with the secondary board 140 through the connecting circuit board 171. Further, with reference of FIG. 5, the host 100 may include a first board-to-board connector 173 and a second board-to-board connector 175. One end of the connecting circuit board 171 may be connected to the main board 160 through the first board-to-board connector 173. Another end of the connecting circuit board 171 may be connected to the secondary board 140 through the second board-to-board connector 175. The first board-to-board connector 173 and the second board-to-board connector 175 may facilitate standardized production and assembly.

As illustrated in FIGS. 3-4, the host 100 includes at least one charging contact 180 connected to the secondary board 140. The first power module 110 may be in conduction with the at least one charging contact 180. The slave 200 may include at least one connecting contact 230. The first power module 110 may be configured to charge the second power module 220 through the at least one charging contact 180 and the at least one connecting contact 230, when the slave 200 is mounted to the host 100 such that the at least one charging contact 180 is connected and contacted with the at least one connecting contact 230. Specifically, in an embodiment, both the at least one charging contact 180 and the at least one connecting contact 230 may include a plurality of metal contacts for conducting electricity. When the slave 200 is mounted to the host 100, a plurality of charging contacts 180 may be connected and contacted with a plurality of connecting contacts 230 in a one-to-one correspondence, and the first power module 110 may be conducted with the at least one charging contact 180 to enable the host 100 to charge the slave 200. The configuration of the cell phone 10 described above may be conducive to charging the slave 200 by the host 100 and may enhance the convenience of charging the slave 200, which may in turn facilitate the slave 200 retaining sufficient power and may be convenient for the user. In other embodiments, the at least one charging contact 180 and the at least one connecting contact 230 may also be used for communication between the host 100 and the slave 200.

In an embodiment, when the slave 200 is mounted to the host 100 such that the at least one charging contact 180 is connected and contacted with the at least one connecting contact 230, the charging interface 120 may be configured to charge the second power module 220 through the charging circuit board 130, the at least one charging contact 180, and the at least one connecting contact 230. In other words, when the slave 200 is mounted to the host 100, the charging interface 120 may be conducted to the at least one charging contact 180 through the charging circuit board 130, thus the charging interface 120 can charge the slave 200 directly. In this way, the slave 200 may be charged conveniently, and energy consumption produced during the slave 200 being charged may be reduced.

As shown in FIGS. 4 and 5, in an embodiment, the first board-to-board connector 173 may be located at a side of the main board 160 away from or back towards the at least one charging contact 180. The second board-to-board connector 175 may be located at a side of the secondary board 140 away from or back towards the at least one charging contact 180. In the above configuration, connection terminals of the first board-to-board connector 173 and connection terminals of the second board-to-board connector 175 may be arranged at a same side, thereby facilitating the thinning of an overall thickness of the main board 160 and the secondary board 140. In the configuration described above, the first board-to-board connector 173 and the second board-to-board connector 175 may be abut against a portion of the host 100 such that reliability of connection may be improved. According to the invention, a portion of the connecting circuit board 171 is disposed across the first power module 110 and located at a side of the first power module 110 where the at least one charging contact 180 is located. The above configuration may allow the first power module 110 to be stacked on the connecting circuit board 171 to facilitate assembly of the connecting circuit board 171. For example, the connecting circuit board 171 may be glued to the first power module 110 or other portion of the host 100 to improve reliability of connection of the connecting circuit board 171.

Furthermore, the host 100 may include a third board-to-board connector 177. The power circuit board 150 may be connected to the secondary board 140 through the third board-to-board connector 177. The third board-to-board connector 177 may facilitate standardized production and assembly of the first power module 110 and the secondary board 140. The third board-to-board connector 177 and the second board-to-board connector 175 may be located at a same side of the secondary board 140. This configuration may allow connection terminals of the third board-to-board connector 177 and connection terminals of the second board-to-board connector 175 to be arranged at a same side of the secondary board 140 to facilitate the thinning of the overall thickness of the secondary board 140. In the above configuration, the second board-to-board connector 175 and the third board-to-board connector 177 may be abut against a portion of the host 100 to enhance reliability of connection.

As shown in FIG. 3, in an embodiment, the slave 200 may have a front surface 221, a rear surface 223, and a peripheral side surface 225. The rear surface 223 may be arranged back towards the front surface 223. The peripheral side surface 225 may be connected between the front surface 221 and the rear surface 223. A display area of the display 210 may be oriented towards the front surface 221. The host 100 may include a seat 191 and a bracket 193 connected to the seat 191. The seat 191 may define a receiving slot 195 and a mounting space for mounting the main board 160, the first power module 110, the secondary board 140, and other electronic components. The bracket 193 may be configured to be reversible relative to the seat 191 to be in one of a folded state and an unfolded state. With reference of FIG. 3, when in the folded state, the bracket 193 may be received in the receiving slot 195. When in the unfolded state, the slave 200 may be placed vertically or obliquely on the seat 191, with the bracket 193 being contacted with the rear surface 223 and the seat 191 being contacted with the peripheral side surface 225. In this way, the slave 200 may be supported by the bracket 193 thereby facilitating user to watch videos or play games, etc. through the slave 200.

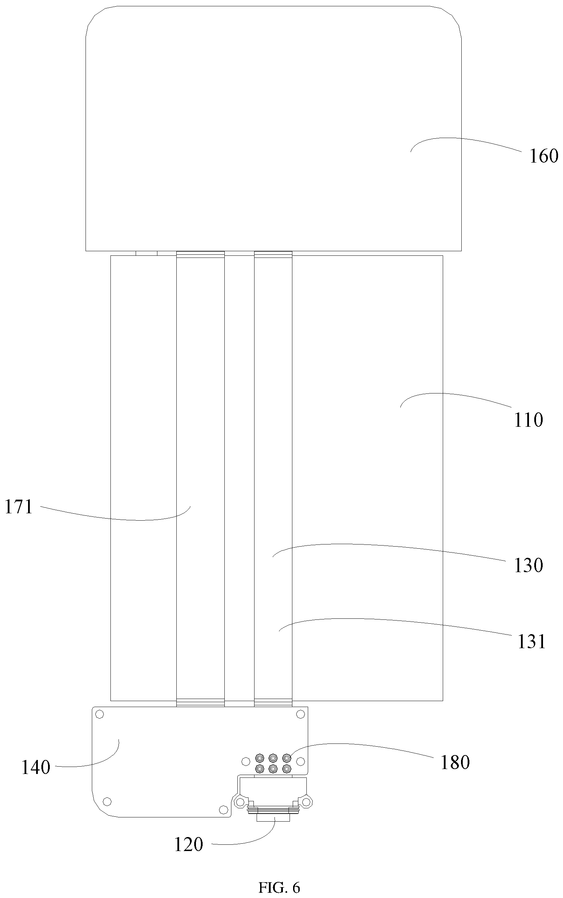

In FIGS. 1-3, the cell phone 10 may include a host 100 and a slave 200. The slave 200 may include a display 210, a second power module 220, and at least one connecting contact 230. The second power module 220 may be configured to supply power to the display 210. The display 210 may be configured to display information and provide an interactive interface for the user. With further reference of FIGS. 6-7, in a second embodiment, the host 100 may include a first power module 110, a charging interface 120, a charging circuit board 130, a secondary board 140, a main board 160, and at least one charging contact 180. Both the first power module 110 and the secondary board 140 may be connected with the main board 160. The main board 160 and the secondary board 140 may be spaced apart from each other. The first power module 110 may be located between the main board 160 and the secondary board 140. The first power module 110 may be configured to supply power to the main board 160 and the secondary board 140. In one embodiment, the charging circuit board 130 may be a flexible circuit board. The flexible circuit board may be thin and easy to bend and deform. The charging interface 120 may be a Micro-USB interface, a Type-C interface, or a Lighting interface. The charging circuit board 130 may include a main part 131 and a branch part 133. Both the main part 131 and the branch part 133 may be connected to the charging interface 120. Both the branch part 133 and the at least one charging contact 180 may be connected to the secondary board 140. The main part 131 may be connected to the main board 160. The charging interface 120 may be configured to charge the first power module 110 through the main part 131 and the main board 160. The slave 200 may be mountable to the host 100 such that the at least one charging contact 180 may be connected and contacted with the at least one connecting contact 230, and the charging interface 120 may be conducted to the at least one charging contact 180 through the branch part 133 and may be configured to charge the second power module 220 of the slave 200 through the at least one charging contact 180. In an embodiment, both the at least one charging contact 180 and the at least one connecting contact 230 may include a plurality of metal contacts for conducting electricity. When the slave 200 is mounted to the host 100, a plurality of charging contacts 180 may be connected and contacted with a plurality of connecting contacts 230 in a one-to-one correspondence to enable the host 100 to charge the slave 200. In other embodiments, the at least one charging contact 180 and the at least one connecting contact 230 may also be used for communication between the host 100 and the slave 200. Understandably, the charging interface 120 and the charging circuit board 130 may also be used for communication between the host 100 and external devices, for example, the host 100 may be connected to an external device such as a computer through a data cable to transfer data.

The slave 200 may also be demountable from the host 100. When the slave 200 is demounted from the host 100, the host 100 may be capable of communicating with the slave 200. When demounted from the host 100, the slave 200 can work independently and perform basic functions such as display, call, etc. The slave 200 may have a small amount of electronic components to facilitate slimness of the slave 200 and to facilitate the user's use. The host 100 may be placed in a pocket or elsewhere. The host 100 may be configured with a large capacity battery or storage unit so as to enhance the performance of the cell phone 10. When mounted to the host 100, the slave 200 can be combined with the host 100 to form the cell phone 10 to achieve complete functionality of the cell phone 10, which is also beneficial to the user's use. In an embodiment, the first power module 110 and the second power module 220 may include lithium batteries capable of being repeatedly charged and discharged multiple times. In other embodiments, the cell phone 10 may be a tablet, etc. The cell phone 10 as described above may be able to achieve slimness of the slave 200 and to improve the performance of the cell phone 10 such as endurance or storage.

For the above-described cell phone 10, when the slave 200 is mounted to the host 100 such that the at least one charging contact 180 are connected and contacted with the at least one connecting contact 230, the charging interface 120 may be configured to charge the second power module 220 through the branch part 133 and the at least one charging contact 180. The above configuration may enable the host 100 to charge the slave 200 conveniently, the energy consumption produced during the slave 200 being charged by the host 100 to be decreased, and the efficiency of charging to be improved.

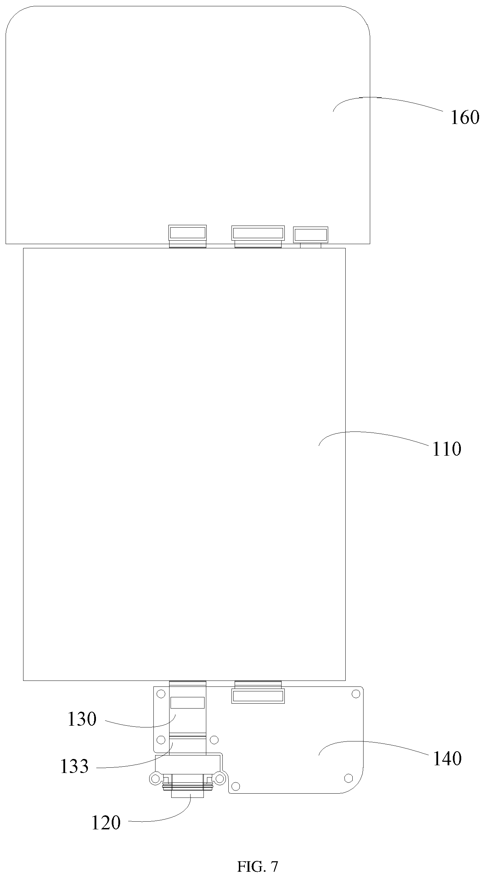

As shown in FIGS. 6 and 7, an area of the main board 160 may be larger than an area of the secondary board 140. The main board 160 may integrate electronic components such as the first master controller, the storage module, and the power management module of the host 100. The secondary board 140 may integrate electronic components such as an antenna unit. In an embodiment, the host 100 may include a connecting circuit board 171. The connecting circuit board 171 may be a flexible circuit board and may connect the main board 160 and the secondary board 140. The main board 160 may be configured to transmit at least one of data and current with the secondary board 140 through the connecting circuit board 171. When the slave 200 is mounted to the host 100, the first power module 110 may be configured to charge the second power module 220 through the connecting circuit board 171 and the at least one charging contact 180. Specifically, current flowing from the first power module 110 may charge the second power module 220 after flowing through the main board 160, the connecting circuit board 171, the secondary board 140, and the at least one charging contact 180 in sequence, and then through the at least one connecting contact 230. In a case, the current may also not flow through the secondary board 140, i.e. the current may pass through the connecting circuit board 171, the at least one charging contact 180 and the at least one connecting contact 230 in turn and then charge the second power module 220. In the above configuration, when the slave 200 is mounted to the host 100, the slave 200 may be charged by the host 100, thus facilitating the slave 200 to maintain sufficient power and enhancing the endurance of the slave 200, thereby improving convenience for the user's use. It can be understood that connection of the first power module 110 with the main board 160, connection of the connecting circuit board 171 with the main board 160 and the secondary board 140, and connection of the charging circuit board 130 with the main board 160 can be implemented by board-to-board connectors to facilitate standardization of production and assembly.

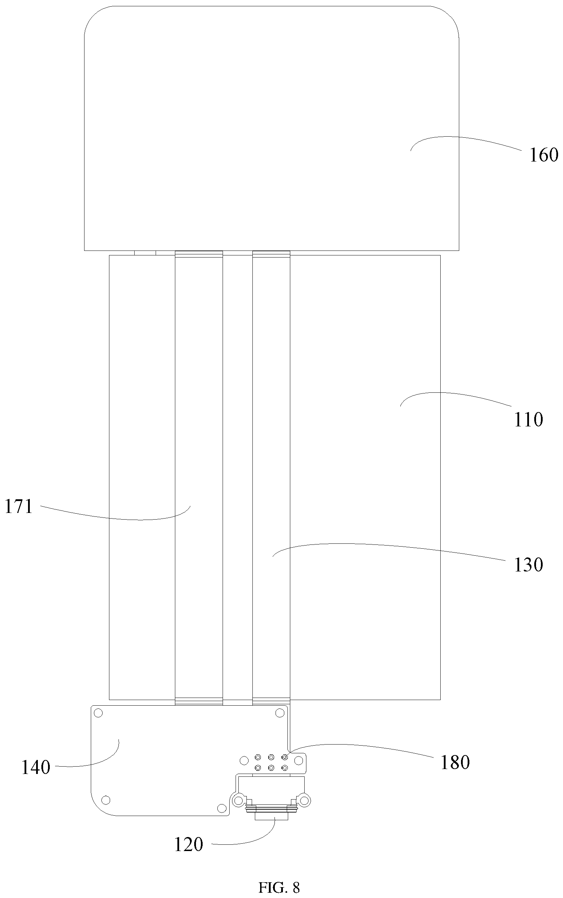

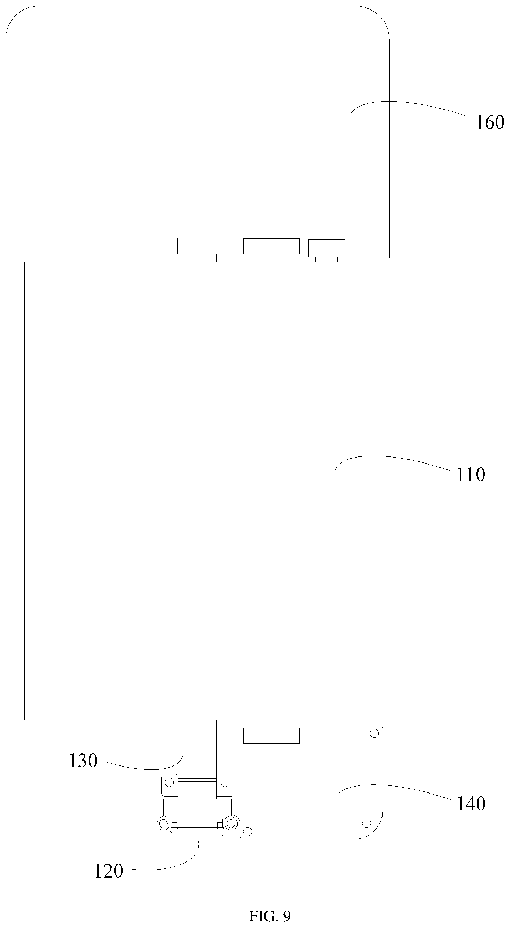

In FIGS. 1-3, the cell phone 10 may include a host 100 and a slave 200. The slave 200 may include a display 210, a second power module 220, and at least one connecting contact 230. The second power module 220 may be configured to supply power to the display 210. The display 210 may be configured to display information and provide an interactive interface for the user. With further reference of FIGS. 8 and 9, in a third embodiment, the host 100 may include a first power module 110, a charging interface 120, a charging circuit board 130, a secondary board 140, a main board 160, and at least one charging contact 180. The first power module 110 and the secondary board 140 may each be connected with the main board 160. The main board 160 and the secondary board 140 may be spaced apart from each other. The first power module 110 may be located between the main board 160 and the secondary board 140. The first power module 110 may be configured to supply power to the main board 160 and the secondary board 140. In one embodiment, the charging circuit board 130 may be a flexible circuit board. The flexible circuit board may be thin and easy to bend and deform. The charging interface 120 may be a Micro-USB interface, a Type-C interface, or a Lighting interface. The charging interface 120 may be connected to the main board 160 through the charging circuit board 130. The charging interface 120 may be configured to charge the first power module 110 through the charging circuit board 130 and the main board 160. The at least one charging contact 180 may be connected to the secondary board 140. The slave 200 may be mounted to the host 100 such that the at least one charging contact 180 may be connected and contacted with the at least one connecting contact 230 and the first power module 110 of the host 100 may be configured to charge the second power module 220 of the slave 200 through the at least one charging contact 180 and the at least one connecting contact 230. In an embodiment, both the at least one charging contact 180 and the at least one connecting contact 230 may include a plurality of metal contacts for conducting electricity. When the slave 200 is mounted to the host 100, a plurality of charging contacts 180 may be connected and contacted with a plurality of connecting contacts 230 in a one-to-one correspondence to enable the host 100 to charge the slave 200. In other embodiments, the at least one charging contact 180 and the at least one connecting contact 230 may also be used for communication between the host 100 and the slave 200. Understandably, the charging interface 120 and the charging circuit board 130 may also be used for communication between the host 100 and external devices, for example, the host 100 may be connected to an external device such as a computer through a data cable to transfer data.

The slave 200 may also be demountable from the host 100. When the slave 200 is demounted from the host 100, the host 100 may be capable of communicating with the slave 200. When demounted from the host 100, the slave 200 can work independently and perform basic functions such as display, call, etc. The slave 200 may have a small amount of electronic components to facilitate slimness of the slave 200 and to facilitate the user's use. The host 100 may be placed in a pocket or elsewhere. The host 100 may be configured with a large capacity battery or storage unit so as to enhance the performance of the cell phone 10. When mounted to the host 100, the slave 200 may be combined with the host 100 to form the cell phone 10 to achieve complete functionality of the cell phone 10, which is also beneficial to the user's use. In an embodiment, the first power module 110 and the second power module 220 may include lithium batteries capable of being repeatedly charged and discharged multiple times. In other embodiments, the cell phone 10 may be a tablet, etc. The cell phone 10 as described above may be able to achieve both slimness of the slave 200 and to improve the performance of the cell phone 10 such as endurance or storage.

For the above-described cell phone 10, when the slave 200 is mounted to the host 100 such that the at least one charging contact 180 is connected and contacted with the at least one connecting contact 230, the first power module 110 may be configured to charge the second power module 220 through the at least one charging contact 180 and the at least one connecting contact 230. The above configuration of the cell phone 10 may facilitate the charging the slave 200 by the host 100 and may enable the host 100 to charge the slave 200 conveniently, which may in turn facilitate the slave 200 retaining sufficient power and bring convenience to the user.

As shown in FIGS. 8 and 9, an area of the main board 160 may be larger than an area of the secondary board 140. The main board 160 may integrate electronic components such as the first master controller, the storage module, and the power management module of the host 100. The secondary board 140 may integrate electronic components such as an antenna unit. In an embodiment, the host 100 may include a connecting circuit board 171. The connecting circuit board 171 may be a flexible circuit board and may connect the main board 160 and the secondary board 140. The main board 160 may be configured to transmit at least one of data and current with the secondary board 140 through the connecting circuit board 171. When the slave 200 is mounted to the host 100, current flowing from the first power module 110 may charge the second power module 220 after flowing through the main board 160, the connecting circuit board 171, the secondary board 140, and the at least one charging contact 180 in sequence, and then through the at least one connecting contact 230. In a case, the current may also not flow through the secondary board 140, i.e. the current may pass through the connecting circuit board 171, the at least one charging contact 180 and the at least one connecting contact 230 in turn and then charge the second power module 220. In the above configuration, when the slave 200 is mounted to the host 100, the slave 200 may be charged by the host 100, thus facilitating the slave 200 to maintain sufficient power and enhancing the endurance of the slave 200, thereby improving convenience for the user's use. It can be understood that connection of the first power module 110 with the main board 160, connection of the connecting circuit board 171 with the main board 160 and the secondary board 140, and connection of the charging circuit board 130 with the main board 160 can be implemented by board-to-board connectors to facilitate standardization of production and assembly.

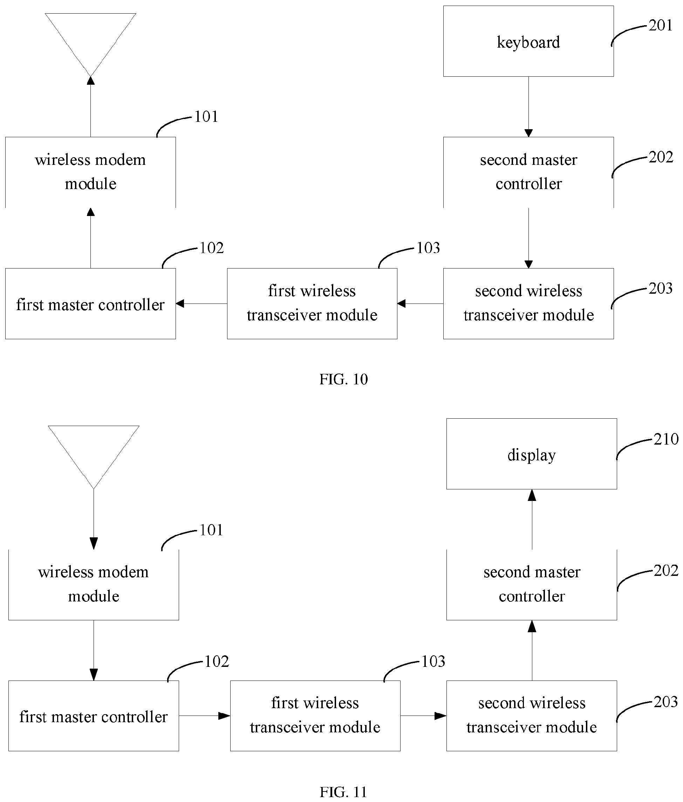

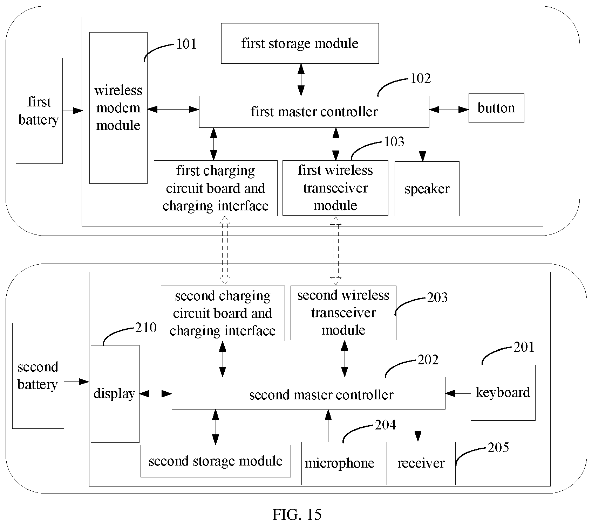

As illustrated in FIGS. 10 to 16, communication mode between the host 100 and the slave 200 and communication mode between the host 100 and external devices are described as follows.

As illustrated in FIGS. 10 and 11, in one embodiment, the host 100 may include a wireless modem module 101, a first master controller 102, and a first wireless transceiver module 103. The slave 200 may include a keyboard 201, a second master controller 202, and a second wireless transceiver module 203. When in a first working state of the cell phone 10, a control command output by the keyboard 201, under a control of the second master controller 202 and after being modulated by the second wireless transceiver module 203, may be sent to the first wireless transceiver module 103, the sent control command may be modulated by the wireless modem module 101 under a control of the first master controller 102, and then the modulated control command may be sent to the air. A control signal from the air may be demodulated by the wireless modem module 101 and then may pass through the first master controller 102, the demodulated control signal may be modulated by the first wireless transceiver module 103, and then the modulated control signal may be sent to the slave 200, after being received by the second wireless transceiver module 203, the received control signal may be displayed by the display 210, under the control of the second master controller 202. It is understood that the keyboard 201 may be a touch keyboard 201 or a display with a touch capability.

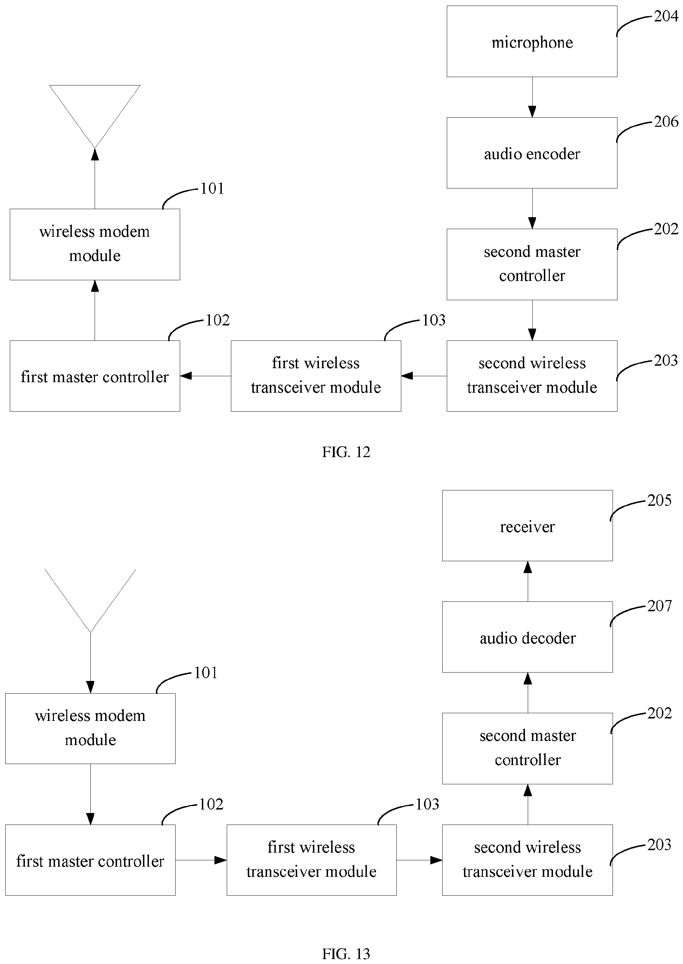

As shown in FIGS. 12 and 13, in an embodiment, the host 100 may include a wireless modem module 101, a first master controller 102, and a first wireless transceiver module 103. The slaver 200 may include a second master controller 202, a microphone 204, a receiver 205, an audio encoder 206, an audio decoder 207, and a second wireless transceiver module 203 configured to communicate with the first wireless transceiver module 103. When in a second working state of the cell phone, an audio signal from the microphone 204, after being encoded by the audio encoder 206, may be transmitted to the second master controller 202, the transmitted audio signal may be sent out by the second wireless transceiver module 203 under a control of the second master controller 202, after the sent audio signal is received by the first wireless transceiver module 103, the received audio signal may be transmitted to the wireless modem module 101 to be modulated under a control of the first master controller 102, and then the modulated audio signal may be sent to the air. A signal from the air, after being demodulated by the wireless modem module 101, may be transmitted to the first master controller 102, and under the control of the first master controller 102, the demodulated signal may be transmitted to the first wireless transceiver module 103, and after being modulated by the first wireless transceiver module 103, the modulated signal may be sent to the slave 200 and then may be demodulated by the second wireless transceiver module 203 to obtain the audio signal, and under the control of the second master controller 202, the demodulated audio signal, after being decoded by the audio decoder 207, may be output by the receiver 205. Understandably, the audio encoder 206 may be a separated hardware unit, or integrated in the microphone 204, or integrated in the second master controller 202. In terms of functionality, the audio encoder 206 may be an audio codec that also has audio decoding functionality. The audio decoder 207 may be a separated hardware unit, or integrated in the receiver 205, or integrated in the second master controller 202. In terms of functionality, the audio decoder 207 may be an audio codec with audio coding functionality.

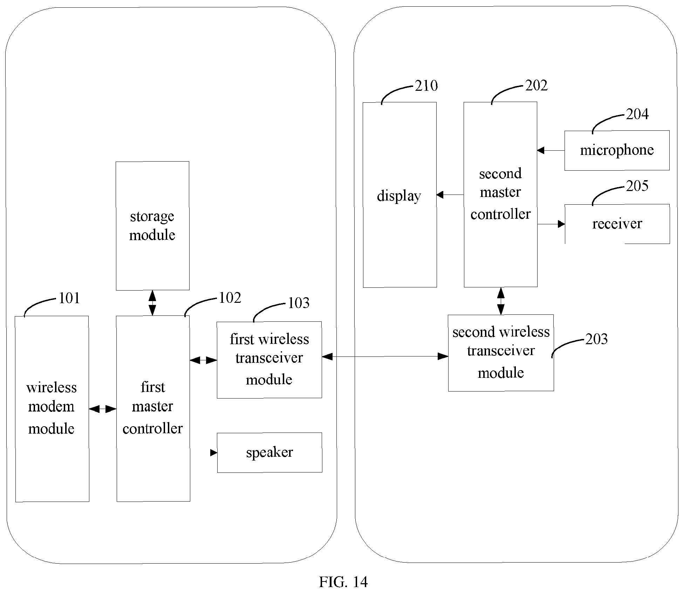

As shown in FIGS. 14-15, in an embodiment, the host 100 may include a wireless modem module 101, a first master controller 102, and a first wireless transceiver module 103. The first master controller 102 may be configured to communicate with the wireless modem module 101 and the first wireless transceiver module 103. The slave 200 may include a second master controller 202, a second wireless transceiver module 203 configured to communicate with the first wireless transceiver module 103. The second master controller 202 may be configured to communicate with the second wireless transceiver module 203. The slave 200 may be configured to access communication network through the host 100.

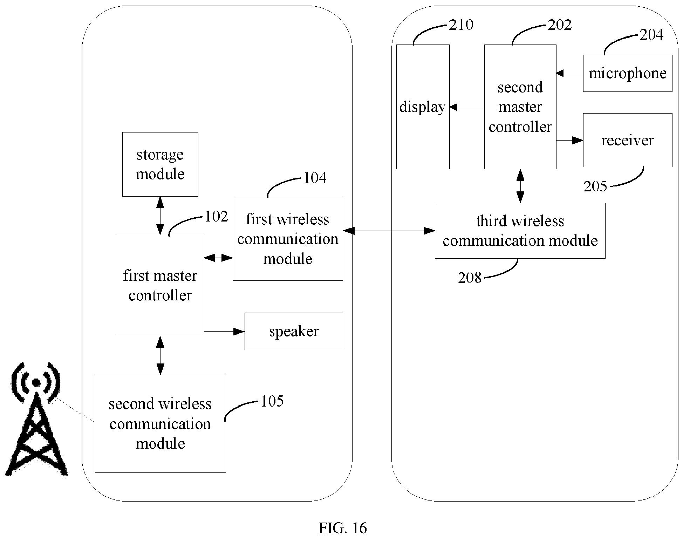

Furthermore, as shown in FIG. 16, the host 100 may include a first wireless communication module 104, a first master controller 102, and a second wireless communication module 105. The first master controller 102 may be configured to communicate with the first wireless communication module 104 and the second wireless communication module 105. The slave 200 may include a second master controller 202 and a third wireless communication module 208. The second master controller 202 may be configured to communicate with the third wireless communication module 208. The third wireless communication module 208 may be configured to communicate with the first wireless communication module 104. The second wireless communication module 105 may be configured to communicate with a base station. In an embodiment, both the first wireless communication module 104 and the third wireless communication module 208 may be low power Bluetooth communication modules. In another embodiment, both the first wireless communication module 104 and the third wireless communication module 208 may be wireless fidelity communication modules.

The technical features of the embodiments described above can be combined in any way. For the sake of concise description, not all possible combinations of the technical features of the aforementioned embodiments have been described.

The above described embodiments are only some of the embodiments of the present disclosure, which are described in a more specific and detailed manner. The description shall not be considered as a limit to the present disclosure. It should be noted that, for a person of ordinary skill in the art, a number of modifications and improvements may be made without departing from the the scope of the attached claims.

## Claims

1. A host (100), comprising a first power module (110), a main board (160), a secondary board (140), a charging interface (120), a charging circuit board (130), a connecting circuit board (171), and at least one charging contact (180);
wherein both the main board (160) and the secondary board (140) are connected with the first power module (110), the first power module (110) is configured to supply power to the main board (160) and the secondary board (140), the charging circuit board (130) comprises a main part (131) and a branch part (133), both the main part (131) and the branch part (133) are connected to the charging interface (120), both the branch part (133) and the at least one charging contact (180) are connected to the secondary board (140), the main part (131) is connected to the main board (160), the charging interface (120) is configured to charge the first power module (110) through the main part (131) and the main board (160), the charging interface (120) is configured to be conducted with the at least one charging contact (180) through the branch part (133); the connecting circuit board (171) connects the main board (160) and the secondary board (140), and the main board (160) is configured to transmit at least one of data and current with the secondary board (140) through the connecting circuit board (171);
**characterized in that** a portion of the connecting circuit board (171) is disposed across the first power module (110) and located at a side of the first power module (110) where the at least one charging contact (180) is located.

2. The host (100) as claimed in claim 1, wherein the main board (160) and the secondary board (140) are spaced apart from each other, the first power module (110) is located between the main board (160) and the secondary board (140).

3. The host (100) as claimed in any one of claims 1-2, further comprising a first board-to-board connector (173) and a second board-to-board connector (175); wherein one end of the connecting circuit board (171) is connected to the main board (160) through the first board-to-board connector (173), and another end of the connecting circuit board (171) is connected to the secondary board (140) through the second board-to-board connector (175); the first board-to-board connector (173) is located at a side of the main board (160) away from or back towards the at least one charging contact (180); the second board-to-board connector (175) is located at a side of the secondary board (140) away from or back towards the at least one charging contact (180).

4. A cell phone (10), **characterized by** comprising:
the host (100) as claimed in any one of claims 1-3; and
a slave (200), comprising a display (210), a second power module (220), and at least one connecting contact (230), wherein the second power module (220) is configured to supply power to the display (210), the slave (200) is mountable to the host (100) such that the at least one charging contact (180) is connected and contacted with the at least one connecting contact (230), and the charging interface (120) is configured to charge the second power module (220) through the branch part (133), the at least one charging contact (180), and the at least one connecting contact (230); the slave (200) is demountable from the host (100), when demounted from the host (100), the slave (200) is capable of communicating with the host (100).

5. The cell phone (10) as claimed in claim 4, when the slave (200) is mounted to the host (100), the first power module (110) is configured to charge the second power module (220) through the connecting circuit board (171), the at least one charging contact (180), and the at least one connecting contact (230).

6. The cell phone (10) as claimed in any one of claims 4-5, wherein the host (100) comprises a camera (190), the camera (190) is connected to the main board (160).

7. The cell phone (10) as claimed in any one of claims 4-6, wherein the first power module (110) and the second power module (220) comprise lithium batteries capable of being charged and discharged multiple times.

8. The cell phone (10) as claimed in any one of claims 4-7, wherein the charging circuit board (130) is a flexible circuit board.

9. The cell phone (10) as claimed in any one of claims 4-8, wherein an area of the main board (160) is larger than an area of the secondary board (140).

10. The cell phone (10) as claimed in any one of claims 4-9, wherein the charging interface (120) is one of a Micro-USB interface, a Type-C interface, and a Lighting interface.

11. The cell phone (10) as claimed in any one of claims 4-10, wherein the slave (200) has a front surface (221), a rear surface (223), and a peripheral side surface (225), the rear surface (223) is arranged back towards the front surface (221), the peripheral side surface (225) is connected between the front surface (221) and the rear surface (223), a display area of the display (210) is oriented towards the front surface (221);
the host (100) comprises a seat (191) and a bracket (193) connected to the seat (191), the seat (191) defines a receiving slot (195), the bracket (193) is configured to be reversible relative to the seat (191) to be in one of a folded state and an unfolded state;
when in the folded state, the bracket (193) is received in the receiving slot (195); when in the unfolded state, the slave (200) is enabled to be placed vertically or obliquely on the seat (191), with the bracket (193) being contacted with the rear surface (223) and the seat (191) being contacted with the peripheral side surface (225).

12. The cell phone (10) as claimed in any one of claims 4-11, wherein the host (100) comprises a wireless modem module (101), a first master controller (102), and a first wireless transceiver module (103); the slave (200) comprises a keyboard (201), a second master controller (202), and a second wireless transceiver module (203);
when in a first working state of the cell phone (10), a control command output by the keyboard (201), under a control of the second master controller (202) and after being modulated by the second wireless transceiver module (203), is sent to the first wireless transceiver module (103), the sent control command is modulated by the wireless modem module (101) under a control of the first master controller (102), and then the modulated control command is sent to the air; a control signal from the air is demodulated by the wireless modem module (101) and then passes through the first master controller (102), the demodulated control signal is modulated by the first wireless transceiver module (103), and then the modulated control signal is sent to the slave (200), after being received by the second wireless transceiver module (203), the received control signal is displayed by the display (210), under the control of the second master controller (202).

13. The cell phone (10) as claimed in any one of claims 4-11, wherein the host (100) comprises a wireless modem module (101), a first master controller (102), and a first wireless transceiver module (103); the slave (200) comprises a second master controller (202), a microphone (204), a receiver (205), an audio encoder (206), an audio decoder (207), a second wireless transceiver module (203) configured to communicate with the first wireless transceiver module (103);
when in a second working state of the cell phone (10), an audio signal from the microphone (204), after being encoded by the audio encoder (206), is transmitted to the second master controller (202), the transmitted audio signal is sent out by the second wireless transceiver module (203) under a control of the second master controller (202), after the sent audio signal is received by the first wireless transceiver module (103), the received audio signal is transmitted to the wireless modem module (101) to be modulated under a control of the first master controller (102), and then the modulated audio signal is sent to the air; a signal from the air, after being demodulated by the wireless modem module (101), is transmitted to the first master controller (102), and under the control of the first master controller (102), the demodulated signal is transmitted to the first wireless transceiver module (103), and after being modulated by the first wireless transceiver module (103), the modulated signal is sent to the slave (200) and is demodulated by the second wireless transceiver module (203) to obtain the audio signal, and under the control of the second master controller (202), the demodulated audio signal, after being decoded by the audio decoder (207), is output by the receiver (205).

14. The cell phone (10) as claimed in any one of claims 4-11, wherein the host (100) comprises a wireless modem module (101), a first master controller (102), and a first wireless transceiver module (103), the first master controller (102) is configured to communicate with the wireless modem module (101) and the first wireless transceiver module (103);
the slave (200) comprises a second master controller (202) and a second wireless transceiver module (203) configured to communicate with the first wireless transceiver module (103), the second master controller (202) is configured to communicate with the second wireless transceiver module (203), the slave (200) is configured to access communication network through the host (100).

15. The cell phone (10) as claimed in any one of claims 4-11, wherein the host (100) comprises a first wireless communication module (104), a first master controller (102), and a second wireless communication module (105), the first master controller (102) is configured to communicate with the first wireless communication module (104) and the second wireless communication module (105);
the slave (200) comprises a second master controller (202) and a third wireless communication module (208), the second master controller (202) is configured to communicate with the third wireless communication module (208), the third wireless communication module (208) is configured to communicate with the first wireless communication module (104), the second wireless communication module (105) is configured to communicate with a base station.

## Patentansprüche

1. Host (100), der ein erstes Leistungsmodul (110), eine Hauptplatte (160), eine sekundäre Platte (140), eine Ladeschnittstelle (120), eine Ladeleiterplatte (130), eine Verbindungsleiterplatte (171) und zumindest einen Ladekontakt (180) umfasst;
wobei sowohl die Hauptplatte (160) als auch die sekundäre Platte (140) mit dem ersten Leistungsmodul (110) verbunden ist, das erste Leistungsmodul (110) zum Zuführen von Leistung zu der Hauptplatte (160) und der sekundären Platte (140) ausgelegt ist, die Ladeleiterplatte (130) einen Hauptteil (131) und einen Zweigteil (133) umfasst, sowohl der Hauptteil (131) als auch der Zweigteil (133) mit der Ladeschnittstelle (120) verbunden ist, sowohl der Zweigteil (133) als auch der zumindest eine Ladekontakt (180) mit der sekundären Platte (140) verbunden ist, der Hauptteil (131) mit der Hauptplatte (160) verbunden ist, die Ladeschnittstelle (120) zum Laden des ersten Leistungsmoduls (110) durch den Hauptteil (131) und die Hauptplatte (160) ausgelegt ist, die Ladeschnittstelle (120) dazu ausgelegt ist, mit dem zumindest einen Ladekontakt (180) durch den Zweigteil (133) geführt zu werden; die Verbindungsleiterplatte (171) die Hauptplatte (160) und die sekundäre Platte (140) verbindet und die Hauptplatte (160) zum Übertragen von zumindest einem von Daten und Strom mit der sekundären Platte (140) durch die Verbindungsleiterplatte (171) ausgelegt ist;
**dadurch gekennzeichnet, dass** ein Abschnitt der Verbindungsleiterplatte (171) über das erste Leistungsmodul (110) hinweg angeordnet ist und sich an einer Seite des ersten Leistungsmoduls (110) befindet, wo sich der zumindest eine Ladekontakt (180) befindet.

2. Host (100) nach Anspruch 1, wobei die Hauptplatte (160) und die sekundäre Platte (140) voneinander beabstandet sind, sich das erste Leistungsmodul (110) zwischen der Hauptplatte (160) und der sekundären Platte (140) befindet.

3. Host (100) nach einem der Ansprüche 1-2, der ferner einen ersten Platte-zu-Platte-Verbinder (173) und einen zweiten Platte-zu-Platte-Verbinder (175) umfasst; wobei ein Ende der Verbindungsleiterplatte (171) durch den ersten Platte-zu-Platte-Verbinder (173) mit der Hauptplatte (160) verbunden ist und ein anderes Ende der Verbindungsleiterplatte (171) durch den zweiten Platte-zu-Platte-Verbinder (175) mit der sekundären Platte (140) verbunden ist; sich der erste Platte-zu-Platte-Verbinder (173) an einer Seite der Hauptplatte (160) weg von oder zurück zu dem zumindest einen Ladekontakt (180) befindet; sich der zweite Platte-zu-Platte-Verbinder (175) an einer Seite der sekundären Platte (140) weg von oder zurück zu dem zumindest einen Ladekontakt (180) befindet.

4. Mobiltelefon (10), **dadurch gekennzeichnet, dass** es umfasst:
den Host (100) nach einem der Ansprüche 1-3 und
einen Slave (200), der eine Anzeige (210), ein zweites Leistungsmodul (220) und zumindest einen Verbindungskontakt (230) umfasst, wobei das zweite Leistungsmodul (220) zum Zuführen von Leistung zu der Anzeige (210) ausgelegt ist, der Slave (200) derart an dem Host (100) montierbar ist, dass der zumindest eine Ladekontakt (180) mit dem zumindest einen Verbindungskontakt (230) verbunden und in Kontakt ist und die Ladeschnittstelle (120) zum Laden des zweiten Leistungsmoduls (220) durch den Zweigteil (133), den zumindest einen Ladekontakt (180) und den zumindest einen Verbindungskontakt (230) ausgelegt ist; der Slave (200) von dem Host (100) demontierbar ist, wenn von dem Host (100) demontiert, der Slave (200) zum Kommunizieren mit dem Host (100) in der Lage ist.

5. Mobiltelefon (10) nach Anspruch 4, wobei, wenn der Slave (200) an dem Host (100) montiert ist, das erste Leistungsmodul (110) zum Laden des zweiten Leistungsmoduls (220) durch die Verbindungsleiterplatte (171), den zumindest einen Ladekontakt (180) und den zumindest einen Verbindungskontakt (230) ausgelegt ist.

6. Mobiltelefon (10) nach einem der Ansprüche 4-5, wobei der Host (100) eine Kamera (190) umfasst, die Kamera (190) mit der Hauptplatte (160) verbunden ist.

7. Mobiltelefon (10) nach einem der Ansprüche 4-6, wobei das erste Leistungsmodul (110) und das zweite Leistungsmodul (220) Lithiumbatterien umfassen, die in der Lage sind, mehrere Male geladen und entladen zu werden.

8. Mobiltelefon (10) nach einem der Ansprüche 4-7, wobei die Ladeleiterplatte (130) eine flexible Leiterplatte ist.

9. Mobiltelefon (10) nach einem der Ansprüche 4-8, wobei ein Bereich der Hauptplatte (160) größer als ein Bereich der sekundären Platte (140) ist.

10. Mobiltelefon (10) nach einem der Ansprüche 4-9, wobei die Ladeschnittstelle (120) eine von einer Mikro-USB-Schnittstelle, einer Typ-C-Schnittstelle und einer Lightning-Schnittstelle ist.

11. Mobiltelefon (10) nach einem der Ansprüche 4-10, wobei der Slave (200) eine Vorderfläche (221), eine Rückfläche (223) und eine Umfangsseitenfläche (225) aufweist, die Rückfläche (223) zurück zu der Vorderfläche (221) angeordnet ist, die Umfangsseitenfläche (225) zwischen der Vorderfläche (221) und der Rückfläche (223) verbunden ist, ein Anzeigebereich der Anzeige (210) zu der Vorderfläche (221) ausgerichtet ist;
der Host (100) einen Sitz (191) und eine Halterung (193), die mit dem Sitz (191) verbunden ist, umfasst, der Sitz (191) einen Aufnahmeschlitz (195) definiert, die Halterung (193) dazu ausgelegt ist, bezogen auf den Sitz (191) reversibel zu sein, um in einem von einem eingeklappten Zustand und einem ausgeklappten Zustand zu sein;
wenn im eingeklappten Zustand, die Halterung (193) in dem Aufnahmeschlitz (195) aufgenommen ist; wenn im ausgeklappten Zustand, der Slave (200) befähigt ist, vertikal oder schräg auf dem Sitz (191) platziert zu sein, wobei die Halterung (193) mit der Rückfläche (223) in Kontakt ist und der Sitz (191) mit der Umfangsseitenfläche (225) in Kontakt ist.

12. Mobiltelefon (10) nach einem der Ansprüche 4-11, wobei der Host (100) ein Modul eines drahtlosen Modems (101), eine erste Hauptsteuerung (102) und ein erstes Modul eines drahtlosen Transceivers (103) umfasst; der Slave (200) eine Tastatur (201), eine zweite Hauptsteuerung (202) und ein zweites Modul eines drahtlosen Transceivers (203) umfasst;
wenn in einem ersten Arbeitszustand des Mobiltelefons (10), ein Steuerbefehl, der durch die Tastatur (201) unter einer Steuerung der zweiten Hauptsteuerung (202) und nach einer Modulation durch das zweite Modul eines drahtlosen Transceivers (203) ausgegeben wird, an das erste Modul eines drahtlosen Transceivers (103) gesendet wird, der gesendete Steuerbefehl durch das Modul eines drahtlosen Modems (101) unter einer Steuerung der ersten Hauptsteuerung (102) moduliert wird und dann der modulierte Steuerbefehl in die Luft gesendet wird; ein Steuersignal aus der Luft durch das Modul eines drahtlosen Modems (101) demoduliert wird und dann durch die erste Hauptsteuerung (102) hindurchgeht, das demodulierte Steuersignal durch das erste Modul eines drahtlosen Transceivers (103) moduliert wird und dann das modulierte Steuersignal nach einem Empfang durch das zweite Modul eines drahtlosen Transceivers (203) an den Slave (200) gesendet wird, das empfangene Steuersignal durch die Anzeige (210) unter der Steuerung der zweiten Hauptsteuerung (202) angezeigt wird.

13. Mobiltelefon (10) nach einem der Ansprüche 4-11, wobei der Host (100) ein Modul eines drahtlosen Modems (101), eine erste Hauptsteuerung (102) und ein erstes Modul eines drahtlosen Transceivers (103) umfasst; der Slave (200) eine zweite Hauptsteuerung(202), ein Mikrofon (204), einen Empfänger (205), einen Audiocodierer (206), einen Audiodecodierer (207), ein zweites Modul eines drahtlosen Transceivers (203), das zum Kommunizieren mit dem ersten Modul eines drahtlosen Transceivers (103) ausgelegt ist, umfasst;
wenn in einem zweiten Arbeitszustand des Mobiltelefons (10), ein Audiosignal von dem Mikrofon (204) nach einer Codierung durch den Audiocodierer (206) an die zweite Hauptsteuerung (202) übertragen wird, das übertragene Audiosignal durch das zweite Modul eines drahtlosen Transceivers (203) unter einer Steuerung der zweiten Hauptsteuerung (202) nach einem Empfang des gesendeten Audiosignals durch das erste Modul eines drahtlosen Transceivers (103) gesendet wird, das empfangene Audiosignal an das Modul eines drahtlosen Modems (101) übertragen wird, um unter einer Steuerung der ersten Hauptsteuerung (102) moduliert zu werden, und dann das modulierte Audiosignal in die Luft gesendet wird; ein Signal aus der Luft nach einer Demodulation durch das Modul eines drahtlosen Modems (101) an die erste Hauptsteuerung (102) übertragen wird und unter der Steuerung der ersten Hauptsteuerung (102) das demodulierte Signal an das erste Modul eines drahtlosen Transceivers (103) übertragen wird und nach einer Modulation durch das erste Modul eines drahtlosen Transceivers (103) das modulierte Signal an den Slave (200) gesendet wird und durch das zweite Modul eines drahtlosen Transceivers (203) demoduliert wird, um das Audiosignal zu erhalten, und unter der Steuerung der zweiten Hauptsteuerung (202) das demodulierte Audiosignal nach einer Decodierung durch den Audiodecodierer (207) durch den Empfänger (205) ausgegeben wird.

14. Mobiltelefon (10) nach einem der Ansprüche 4-11, wobei der Host (100) ein Modul eines drahtlosen Modems (101), eine erste Hauptsteuerung (102) und ein erstes Modul eines drahtlosen Transceivers (103) umfasst, die erste Hauptsteuerung (102) zum Kommunizieren mit dem Modul eines drahtlosen Modems (101) und dem ersten Modul eines drahtlosen Transceivers (103) ausgelegt ist;
der Slave (200) eine zweite Hauptsteuerung (202) und ein zweites Modul eines drahtlosen Transceivers (203), das zum Kommunizieren mit dem ersten Modul eines drahtlosen Transceivers (103) ausgelegt ist, umfasst, die zweite Hauptsteuerung (202) zum Kommunizieren mit dem zweiten Modul eines drahtlosen Transceivers (203) ausgelegt ist, der Slave (200) zum Zugreifen auf das Kommunikationsnetzwerk durch den Host (100) ausgelegt ist.

15. Mobiltelefon (10) nach einem der Ansprüche 4-11, wobei der Host (100) ein erstes drahtloses Kommunikationsmodul (104), eine erste Hauptsteuerung (102) und ein zweites drahtloses Kommunikationsmodul (105) umfasst, die erste Hauptsteuerung (102) zum Kommunizieren mit dem ersten drahtlosen Kommunikationsmodul (104) und dem zweiten drahtlosen Kommunikationsmodul (105) ausgelegt ist;
der Slave (200) eine zweite Hauptsteuerung (202) und ein drittes drahtloses Kommunikationsmodul (208) umfasst, die zweite Hauptsteuerung (202) zum Kommunizieren mit dem dritten drahtlosen Kommunikationsmodul (208) ausgelegt ist, das dritte drahtlose Kommunikationsmodul (208) zum Kommunizieren mit dem ersten drahtlosen Kommunikationsmodul (104) ausgelegt ist, das zweite drahtlose Kommunikationsmodul (105) zum Kommunizieren mit einer Basisstation ausgelegt ist.

## Revendications

1. Hôte (100), comprenant un premier module d'alimentation (110), une carte principale (160), une carte secondaire (140), une interface de charge (120), une carte de circuit de charge (130), une carte de circuit de connexion (171), et au moins un contact de charge (180) ;
dans lequel à la fois la carte principale (160) et la carte secondaire (140) sont connectées au premier module d'alimentation (110), le premier module d'alimentation (110) est configuré pour fournir de l'énergie à la carte principale (160) et à la carte secondaire (140), la carte de circuit de charge (130) comprend une partie principale (131) et une partie de branchement (133), à la fois la partie principale (131) et la partie de branchement (133) sont connectées à l'interface de charge (120), à la fois la partie de branchement (133) et l'au moins un contact de charge (180) sont connectés à la carte secondaire (140), la partie principale (131) est connectée à la carte principale (160), l'interface de charge (120) est configurée pour charger le premier module d'alimentation (110) par le biais de la partie principale (131) et de la carte principale (160), l'interface de charge (120) est configurée pour être conduite avec l'au moins un contact de charge (180) à travers la partie de branchement (133) ; la carte de circuit de connexion (171) connecte la carte principale (160) et la carte secondaire (140), et la carte principale (160) est configurée pour transmettre au moins l'un de données et de courant avec la carte secondaire (140) par le biais de la carte de circuit de connexion (171) ;
**caractérisé en ce qu'**une partie de la carte de circuit de connexion (171) est disposée à travers le premier module d'alimentation (110) et située au niveau d'un côté du premier module d'alimentation (110) où l'au moins un contact de charge (180) est situé.

2. Hôte (100) selon la revendication 1, dans lequel la carte principale (160) et la carte secondaire (140) sont espacées l'une de l'autre, le premier module d'alimentation (110) est situé entre la carte principale (160) et la carte secondaire (140).

3. Hôte (100) selon l'une quelconque des revendications 1 à 2, comprenant en outre un premier connecteur carte à carte (173) et un second connecteur carte à carte (175) ; dans lequel une extrémité de la carte de circuit de connexion (171) est connectée à la carte principale (160) par le biais du premier connecteur carte à carte (173), et une autre extrémité de la carte de circuit de connexion (171) est connectée à la carte secondaire (140) par le biais du second connecteur carte à carte (175) ; le premier connecteur carte à carte (173) est situé au niveau d'un côté de la carte principale (160) à l'écart de ou à l'arrière vers l'au moins un contact de charge (180) ; le second connecteur carte à carte (175) est situé au niveau d'un côté de la carte secondaire (140) à l'écart de ou à l'arrière vers l'au moins un contact de charge (180).

4. Téléphone cellulaire (10), **caractérisé en ce qu'**il comprend :
l'hôte (100) selon l'une quelconque des revendications 1 à 3 ; et
un esclave (200), comprenant un écran (210), un second module d'alimentation (220), et au moins un contact de connexion (230), dans lequel le second module d'alimentation (220) est configuré pour fournir de l'énergie à l'écran (210), l'esclave (200) peut être monté sur l'hôte (100) de telle sorte que l'au moins un contact de charge (180) est connecté et en contact avec l'au moins un contact de connexion (230), et l'interface de charge (120) est configurée pour charger le second module d'alimentation (220) par le biais de la partie de branchement (133), l'au moins un contact de charge (180), et l'au moins un contact de connexion (230) ; l'esclave (200) peut être démonté de l'hôte (100), lorsqu'il est démonté de l'hôte (100), l'esclave (200) est apte à communiquer avec l'hôte (100).

5. Téléphone cellulaire (10) selon la revendication 4, dans lequel lorsque l'esclave (200) est monté sur l'hôte (100), le premier module d'alimentation (110) est configuré pour charger le second module d'alimentation (220) par le biais de la carte de circuit de connexion (171), l'au moins un contact de charge (180), et l'au moins un contact de connexion (230).

6. Téléphone cellulaire (10) selon l'une quelconque des revendications 4 à 5, dans lequel l'hôte (100) comprend une caméra (190), la caméra (190) est connectée à la carte principale (160).

7. Téléphone cellulaire (10) selon l'une quelconque des revendications 4 à 6, dans lequel le premier module d'alimentation (110) et le second module d'alimentation (220) comprennent des batteries lithium aptes à être chargées et déchargées plusieurs fois.

8. Téléphone cellulaire (10) selon l'une quelconque des revendications 4 à 7, dans lequel la carte de circuit de charge (130) est une carte de circuit flexible.

9. Téléphone cellulaire (10) selon l'une quelconque des revendications 4 à 8, dans lequel une zone de la carte principale (160) est plus grande qu'une zone de la carte secondaire (140).

10. Téléphone cellulaire (10) selon l'une quelconque des revendications 4 à 9, dans lequel l'interface de charge (120) est l'une d'une interface Micro-USB, d'une interface Type-C, et d'une interface Lightning.

11. Téléphone cellulaire (10) selon l'une quelconque des revendications 4 à 10, dans lequel l'esclave (200) a une surface avant (221), une surface arrière (223), et une surface latérale périphérique (225), la surface arrière (223) est arrangée à l'arrière vers la surface avant (221), la surface latérale périphérique (225) est connectée entre la surface avant (221) et la surface arrière (223), une zone d'affichage de l'écran (210) est orientée vers la surface avant (221) ;
l'hôte (100) comprend une assise (191) et un support (193) connecté à l'assise (191), l'assise (191) définit une fente de réception (195), le support (193) est configuré pour être réversible par rapport à l'assise (191) pour être dans l'un d'un état plié et d'un état déplié ; lorsqu'il est dans l'état plié, le support (193) est reçu dans la fente de réception (195) ; lorsqu'il est dans l'état déplié, l'esclave (200) peut être placé verticalement ou de manière oblique sur l'assise (191), avec le support (193) en contact avec la surface arrière (223) et l'assise (191) étant en contact avec la surface latérale périphérique (225).

12. Téléphone cellulaire (10) selon l'une quelconque des revendications 4 à 11, dans lequel l'hôte (100) comprend un module modem sans fil (101), un premier dispositif de commande maître (102), et un premier module émetteur-récepteur sans fil (103) ; l'esclave (200) comprend un clavier (201), un second dispositif de commande maître (202), et un second module émetteur-récepteur sans fil (203) ;
dans un premier état de fonctionnement du téléphone cellulaire (10), une commande de contrôle émise par le clavier (201), sous une commande du second dispositif de commande maître (202) et après avoir été modulée par le second module émetteur-récepteur sans fil (203), est envoyée au premier module émetteur-récepteur sans fil (103), la commande de contrôle envoyée est modulée par le module modem sans fil (101) sous une commande du premier dispositif de commande maître (102), puis la commande de contrôle modulée est envoyée dans l'air ; un signal de commande de l'air est démodulé par le module modem sans fil (101), puis traverse le premier dispositif de commande maître (102), le signal de commande démodulé est modulé par le premier module émetteur-récepteur sans fil (103), puis le signal de commande modulé est envoyé à l'esclave (200), après avoir été reçu par le second module émetteur-récepteur sans fil (203), le signal de commande reçu est affiché par l'écran (210), sous la commande du second dispositif de commande maître (202) .

13. Téléphone cellulaire (10) selon l'une quelconque des revendications 4 à 11, dans lequel l'hôte (100) comprend un module modem sans fil (101), un premier dispositif de commande maître (102), et un premier module émetteur-récepteur sans fil (103) ; l'esclave (200) comprend un second dispositif de commande maître (202), un microphone (204), un récepteur (205), un encodeur audio (206), un décodeur audio (207), un second module émetteur-récepteur sans fil (203) configuré pour communiquer avec le premier module émetteur-récepteur sans fil (103) ;
dans un second état de fonctionnement du téléphone cellulaire (10), un signal audio provenant du microphone (204), après avoir été codé par l'encodeur audio (206), est transmis au second dispositif de commande maître (202), le signal audio transmis est envoyé par le second module émetteur-récepteur sans fil (203) sous une commande du second dispositif de commande maître (202), après que le signal audio envoyé est reçu par le premier module émetteur-récepteur sans fil (103), le signal audio reçu est transmis au module modem sans fil (101) pour être modulé sous une commande du premier dispositif de commande maître (102), puis le signal audio modulé est envoyé dans l'air ; un signal provenant de l'air, après avoir été démodulé par le module modem sans fil (101), est transmis au premier dispositif de commande maître (102), et sous la commande du premier dispositif de commande maître (102), le signal démodulé est transmis au premier module émetteur-récepteur sans fil (103), et après avoir été modulé par le premier module émetteur-récepteur sans fil (103), le signal modulé est envoyé à l'esclave (200) et est démodulé par le second module émetteur-récepteur sans fil (203) pour obtenir le signal audio, et sous la commande du second dispositif de commande maître (202), le signal audio démodulé, après avoir été décodé par le décodeur audio (207), est émis par le récepteur (205).

14. Téléphone cellulaire (10) selon l'une quelconque des revendications 4 à 11, dans lequel l'hôte (100) comprend un module modem sans fil (101), un premier dispositif de commande maître (102), et un premier module émetteur-récepteur sans fil (103), le premier dispositif de commande maître (102) est configuré pour communiquer avec le module modem sans fil (101) et le premier module émetteur-récepteur sans fil (103) ;
l'esclave (200) comprend un second dispositif de commande maître (202) et un second module émetteur-récepteur sans fil (203) configuré pour communiquer avec le premier module émetteur-récepteur sans fil (103), le second dispositif de commande maître (202) est configuré pour communiquer avec le second module émetteur-récepteur sans fil (203), l'esclave (200) est configuré pour accéder à un réseau de communication par le biais de l'hôte (100).

15. Téléphone cellulaire (10) selon l'une quelconque des revendications 4 à 11, dans lequel l'hôte (100) comprend un premier module de communication sans fil (104), un premier dispositif de commande maître (102), et un deuxième module de communication sans fil (105), le premier dispositif de commande maître (102) est configuré pour communiquer avec le premier module de communication sans fil (104) et le deuxième module de communication sans fil (105) ;
l'esclave (200) comprend un second dispositif de commande maître (202) et un troisième module de communication sans fil (208), le second dispositif de commande maître (202) est configuré pour communiquer avec le troisième module de communication sans fil (208), le troisième module de communication sans fil (208) est configuré pour communiquer avec le premier module de communication sans fil (104), le deuxième module de communication sans fil (105) est configuré pour communiquer avec une station de base.
